# EUROPÄISCHE PATENTSCHRIFT

(11) **EP 3 088 745 B1**
(45) Veröffentlichungstag und Bekanntmachung des Hinweises auf die Patenterteilung: **05.08.2020**
(21) Anmeldenummer: 15165208.8
(22) Anmeldetag: 27.04.2015
(51) Int. Cl.: F04D 19/04, F04D 29/26, F04D 29/64, F16D 1/08, F04C 25/02

(54) **ROTORANORDNUNG FÜR EINE VAKUUMPUMPE UND VAKUUMPUMPE**
ROTOR ASSEMBLY FOR A VACUUM PUMP AND VACUUM PUMP
SYSTÈME DE ROTOR POUR UNE POMPE À VIDE ET POMPE À VIDE

(43) Veröffentlichungstag der Anmeldung: 02.11.2016
(73) Patentinhaber: PFEIFFER VACUUM GMBH, 35614 Asslar (DE)
(72) Erfinder: Losch, Wolfgang, 35080 Bad Endbach (DE); Wagner, Jürgen, 57629 Müschenbach (DE); Stoll, Tobias, 35644 Hohenahr (DE); Schweighöfer, Michael, 35641 Schöffengrund (DE)
(74) Vertreter: Manitz Finsterwald Patent- und Rechtsanwaltspartnerschaft mbB

(56) Entgegenhaltungen:
- EP-A2- 1 201 929
- DE-A1- 3 732 223

## Beschreibung

Die vorliegende Erfindung betrifft eine Rotoranordnung gemäß dem Oberbegriff des Anspruchs 1, wie beispielweise aus der EP 1 201 929 A2 bekannt.

Derartige Rotoranordnungen können dazu eingesetzt werden, um eine Drehbewegung eines Rotors eines Elektromotors auf eine Welle zu übertragen, um zum Beispiel in einer Vakuumpumpe einen Pumpmechanismus, wie zum Beispiel die Rotorscheiben eines turbomolekularen Pumpmechanismus, über die Welle anzutreiben. Verbindungen zwischen einer Nabe und einer Welle werden auch als Welle-Nabe-Verbindungen bezeichnet. Nach dem Stand der Technik können Welle-Nabe-Verbindungen nach der Art der Kraftübertragung zwischen der Welle und der Nabe unterteilt werden in kraftschlüssige Verbindungen, formschlüssige Verbindungen, vorgespannte formschlüssige Verbindungen und stoffschlüssige Verbindungen.

Bei Vakuumpumpen, insbesondere bei Turbomolekularpumpen, kann es erforderlich sein, dass die Welle mit hohen Drehzahlen betrieben wird, um die mit der Welle gekoppelten Pumpstufen ausreichend schnell anzutreiben und dadurch einen entsprechend hohen Pumpeffekt zu bewirken. Daher ist es erforderlich, dass im Bereich der Verbindung zwischen der Welle und der Nabe möglichst keine Unwuchten auftreten, da diese sich nachteilig auf die Rotation der Welle auswirken und zu Verschleiß oder auch zu einer Beschädigung der Welle oder deren Lager führen können.

Zur Vermeidung von derartigen Unwuchten sind kraftschlüssige Verbindungen zwischen der Welle und der Nabe zu bevorzugen. Dabei erfolgt die Kraftübertragung zwischen der Welle und der Nabe durch einen Reibungswiderstand. Zwischen der Nabe und der Welle ist dabei ein Pressverband ausgebildet, der nach dem Stand der Technik zum Beispiel durch besondere Spannelemente wie zum Beispiel Klemmnaben oder Schrumpfscheiben bewerkstelligt oder der als Presspassungsaufbau ausgebildet werden kann, wie in der DE 37 32 223 A1 beschrieben.

Bei einer Rotoranordnung für eine Vakuumpumpe kann es gewünscht sein, dass die Nabe von der Welle demontiert werden kann, zum Beispiel zu Reparaturzwecken, und zwar so, dass bei der Demontage weder die Nabe noch die Welle beschädigt wird.

Der vorliegenden Erfindung liegt daher die Aufgabe zugrunde, eine verbesserte Rotoranordnung für eine Vakuumpumpe anzugeben, die eine Verbindung zwischen einer Welle und einer Nabe umfasst, mittels der eine sichere Kraftübertragung zwischen der Nabe und der Welle erreicht werden kann und bei der sich, z.B. zu Reparaturzwecken, die Nabe und die Welle ohne Beschädigung voneinander trennen lassen.

Die Aufgabe wird durch eine Rotoranordnung für eine Vakuumpumpe mit den Merkmalen des Anspruchs 1 gelöst. Bevorzugte Ausführungsformen und Weiterbildungen der Erfindung sind in den abhängigen Ansprüchen angegeben.

Eine erfindungsgemäße Rotoranordnung für eine Vakuumpumpe umfasst einen Rotor, der eine Nabe aufweist, und eine Welle, wobei ein erster Abschnitt der Welle und ein erster Abschnitt der Nabe relativ zueinander eine erste Presspassung und ein zweiter Abschnitt der Welle und ein zweiter Abschnitt der Nabe relativ zueinander eine zweite Presspassung derart aufweisen, dass bei auf der Welle aufgesteckter Nabe zwischen dem ersten Abschnitt der Welle und dem ersten Abschnitt der Nabe ein erster Pressverband und zwischen dem zweiten Abschnitt der Welle und dem zweiten Abschnitt der Nabe ein zweiter Pressverband gebildet ist.

Der vorliegenden Erfindung liegt somit der Gedanke zugrunde, sowohl bei der Welle als auch bei der Nabe jeweils wenigstens zwei Abschnitte vorzusehen, die relativ zueinander jeweils eine Presspassung aufweisen. Wenn die Welle auf der Nabe aufgesteckt ist, sind somit wenigstens zwei Pressverbände zwischen der Welle und der Nabe vorhanden. Durch die Pressverbände werden kraftschlüssige Verbindungen zwischen der Nabe und der Welle hergestellt, um eine sichere Kraftübertragung zwischen der Welle und der Nabe zu erreichen. Andererseits verursachen die Pressverbände keine oder allenfalls nur eine geringe Unwucht, wodurch die Welle auch mit hohen Drehzahlen, z.B. in einer Vakuumpumpe, betrieben werden kann. Ferner können die Presspassungen derart dimensioniert sein, dass sich - trotz einer guten Kraftübertragung und eines festen Sitzes der Nabe auf der Welle - die beiden Teile ohne Beschädigung voneinander trennen lassen. Erfindungsgemäß ist zwischen dem ersten und zweiten Abschnitt der Welle ein dritter Abschnitt vorgesehen. Entsprechend ist zwischen dem ersten und zweiten Abschnitt der Nabe ein dritter Abschnitt vorgesehen. Die ersten und zweiten Abschnitte der Welle und entsprechend die ersten und zweiten Abschnitte der Nabe sind somit durch einen jeweiligen dritten Abschnitt voneinander getrennt. Erfindungsgemäß weisen der dritte Abschnitt der Welle und der dritte Abschnitt der Nabe relativ zueinander eine Spielpassung auf. Bei auf der Welle aufgesteckter Nabe ist somit zwischen dem dritten Abschnitt der Welle und dem dritten Abschnitt der Nabe ein gewisses Spiel vorhanden, so dass zwischen dem dritten Abschnitt der Welle und dem dritten Abschnitt der Nabe kein Pressverband ausgebildet wird. Durch die dritten Abschnitte der Welle und Nabe lässt sich die Nabe auf vorteilhafte Weise von der Welle trennen. Eine Beschädigung der Welle oder der Nabe kann dabei vermieden werden.

Der erste Abschnitt der Welle und der zweite Abschnitt der Welle sind also in Längsrichtung der Welle gesehen voneinander beabstandet. Dementsprechend sind der erste Abschnitt der Nabe und der zweite Abschnitt der Nabe in Längserstreckung der Nabe voneinander beabstandet.

Der erste Abschnitt der Welle und der zweite Abschnitt der Welle weisen dabei bevorzugt eine Längserstreckung in axialer Richtung der Welle, also eine axiale Längserstreckung, auf. Entsprechend weisen der erste und zweite Abschnitt der Nabe bevorzugt eine jeweilige axiale Längserstreckung in axialer Richtung der Nabe auf. Bei auf der Welle angeordneter Nabe stehen sich somit ein flächiger erster Abschnitt der Welle und ein flächiger erster Abschnitt der Nabe entgegen bzw. die beiden flächigen Abschnitte sind in Art einer Presspassung miteinander verpresst. Entsprechendes gilt für die zweiten Abschnitte der Welle und der Nabe.

Bevorzugt ist die axiale Länge des ersten Abschnitts der Welle zumindest im Wesentlichen gleich der axialen Länge des ersten Abschnitts der Nabe. Bevorzugt ist die axiale Länge des zweiten Abschnitts der Welle zumindest im Wesentlichen gleich der axialen Länge des zweiten Abschnitts der Nabe. Bevorzugt ist die axiale Länge des dritten Abschnitts der Welle zumindest im Wesentlichen gleich der axialen Länge des dritten Abschnitts der Nabe.

An der Welle und der Nabe können weitere, einander zugeordnete Abschnitte vorgesehen sein, die relativ zueinander eine Presspassung oder eine Spielpassung aufweisen. Beispielsweise können ein vierter Abschnitt der Welle und ein vierter Abschnitt der Nabe eine weitere, dritte Presspassung zueinander aufweisen, so dass bei auf der Welle aufgesteckter Nabe zwischen dem vierten Abschnitt der Welle und dem vierten Abschnitt der Nabe ein weiterer, dritter Pressverband gebildet ist. Ferner kann zwischen dem zweiten und vierten Abschnitt der Welle ein fünfter Abschnitt der Welle vorgesehen sein. Entsprechend kann zwischen dem zweiten und vierten Abschnitt der Nabe ein fünfter Abschnitt der Nabe vorgesehen sein. Der fünfte Abschnitt der Welle und der fünfte Abschnitt der Nabe können relativ zueinander eine Spielpassung aufweisen, so dass bei auf der Welle aufgesteckter Nabe ein geringes Spiel bzw. ein kleiner radialer Spalt zwischen den beiden fünften Abschnitten ausgebildet ist.

Nach einer Ausgestaltung der Erfindung ist/sind die erste Presspassung und/oder die zweite Presspassung derart dimensioniert, dass Drehmomente bis zu einem maximalen Drehmomentwert von der Nabe auf die Welle, oder umgekehrt, übertragbar sind. Die Übertragung der z.B. beim Betrieb einer Vakuumpumpe auftretenden Drehmomente kann somit sichergestellt werden.

Nach einer Weiterbildung der Erfindung ist/sind die axiale Länge des ersten Abschnitts der Welle und/oder die axiale Länge des ersten Abschnitts der Nabe und/oder die axiale Länge des zweiten Abschnitts der Welle und/oder die axiale Länge des zweiten Abschnitts der Nabe derart dimensioniert, dass Drehmomente bis zu einem maximalen Drehmomentwert von der Nabe auf die Welle übertragbar sind. Durch geeignete Wahl der axialen Längen der Abschnitte von Welle und Nabe kann somit ebenfalls eine sichere Drehmomentübertragung erreicht werden.

Insbesondere ist/sind die erste Presspassung und/oder die zweite Presspassung derart dimensioniert, dass die Nabe von der Welle beschädigungsfrei demontierbar ist. Bei Bedarf ist somit eine Demontage der Nabe von der Welle möglich.

Die axiale Länge des ersten Abschnitts der Welle und/oder der Nabe und/oder die die axiale Länge des zweiten Abschnitts der Welle und/oder der Nabe kann/können derart dimensioniert sein, dass die Nabe von der Welle beschädigungsfrei demontierbar ist. Die Nabe lässt sich somit von der Welle bei Bedarf ohne weiteres demontieren.

Nach einer bevorzugten Ausgestaltung der Erfindung handelt es sich bei dem Rotor um einen Rotor eines Elektromotors. Bei der Welle kann es sich ferner um die Welle einer Vakuumpumpe handeln, auf die die Rotornabe des Elektromotorrotors aufgesetzt ist. Bei der Welle kann es sich aber auch um eine Abtriebswelle eines Elektromotors handeln, die zur Kopplung mit einer Welle einer Vakuumpumpe vorgesehen ist bzw. mit der Vakuumpumpenwelle gekoppelt ist.

Vorzugsweise weist der Rotor ein Blechpaket auf, in welchem Permanentmagnete vergraben sind. Die Permanentmagnete können somit in dem Blechpaket des Rotors aufgenommen bzw. in das Blechpaket integriert sein. Die vergrabenen Permanentmagnete werden auch bei hohen Rotordrehzahlen sicher gehalten. Außerdem werden keine Bandagen oder vergleichbare Fixierungsmittel zur Fixierung der Permanentmagnete am Rotor benötigt. Dadurch verursachte Unwuchten können somit vermieden werden.

Bei dem Elektromotor kann es sich insbesondere um einen PMSM-Elektromotor handeln (PMSM = Permanent Magnet Synchronous Motor), bei dem es sich um einen Permanentmagnet aufweisenden Synchronmotor handelt. Insbesondere handelt es sich bei dem Elektromotor um einen IPM-Motor (IPM = Interior Permanent Magnet), also um einen Motor, bei dem die Magnete im Rotor vergraben sind.

Bei dem Rotor kann es sich auch um den Rotor einer Magnetkupplung handeln.

Magnetkupplungen können insbesondere als hermetisch dichte Dreh- oder Schiebedurchführungen benutzt werden. Eine derartige Magnetkupplung kann eine außerhalb eines Vakuums liegende Permanentmagnetanordnung aufweisen, die einen im Vakuum dreh- oder verschiebbar gelagerten, ebenfalls mit Magneten bestückten Rotor mitnimmt. Beide Teile können durch ein dünnwandiges Rohr vakuumtechnisch voneinander getrennt sein. Der Abstand der Magnete von Innen- und Außenläufer ist dabei möglichst gering gehalten, damit die magnetische Koppelkraft zwischen ihnen möglichst groß ist. Der Rotor innerhalb des Vakuums kann mit einer zu bewegenden Anwendung verbunden sein, während ein Magnetläufer außerhalb des Vakuums über einen Elektromotor antreibbar ist, dessen Rotornabe entsprechend den vorstehenden Ausführungen mit einer Welle der Magnetkupplung verbunden sein kann.

Die Erfindung betrifft auch eine Vakuumpumpe, insbesondere eine Drehschieber-, Wälzkolben- oder Turbomolekularpumpe, mit wenigstens einem Pumpmechanismus zum Pumpen eines Gases von einen Einlass der Vakuumpumpe zu einem Auslass der Vakuumpumpe und die wenigstens eine erfindungsgemäße Rotoranordnung umfasst.

Nachfolgend wird die Erfindung beispielhaft unter Bezugnahme auf die beigefügten Figuren beschrieben. Es zeigen, jeweils schematisch,
- Fig. 1: eine Querschnittsdarstellung einer Vakuumpumpe,
- Fig. 2: einen Längsschnitt durch eine Welle einer erfindungsgemäßen Rotoranordnung,
- Fig. 3: eine vergrößerte Darstellung des Ausschnittes X von Fig. 2,
- Fig. 4: eine vergrößerte Darstellung des Ausschnittes Z von Fig. 3,
- Fig. 5: einen Querschnitt durch eine Nabe eines Rotors einer erfindungsgemäßen Rotoranordnung,
- Fig. 6: einen Längsschnitt durch die Nabe längs der in Fig. 5 gezeigten Linie A-A, und
- Fig. 7: eine vergrößerte Darstellung des Ausschnitts Y von Fig. 6.

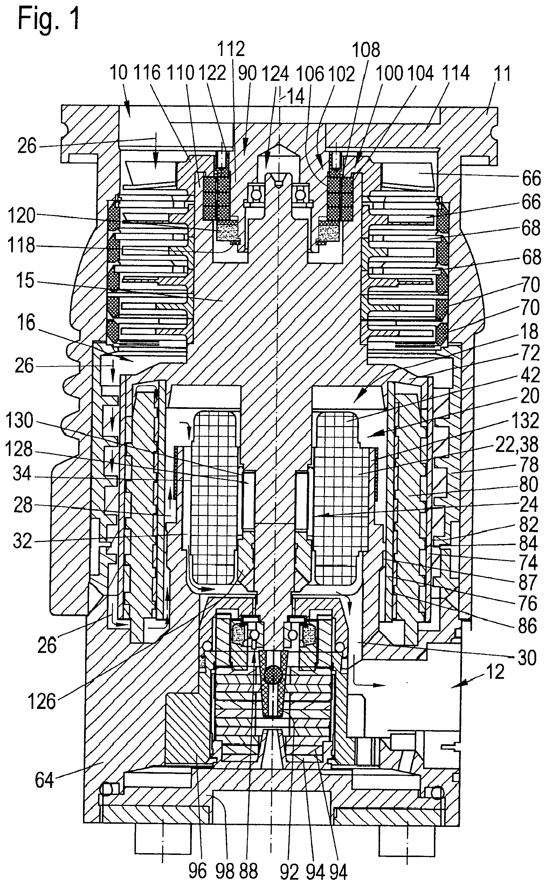

Die in Fig. 1 gezeigte Vakuumpumpe umfasst einen von einem Einlassflansch 11 umgebenen Pumpeneinlass 10 und einen Pumpenauslass 12 sowie mehrere Prozessgaspumpstufen zur Förderung des an dem Pumpeneinlass 10 anstehenden Prozessgases zu dem Pumpenauslass 12. Die Vakuumpumpe umfasst ein Gehäuse 64 und einen in dem Gehäuse 64 angeordneten Rotor 16 mit einer um die Rotationsachse 14 drehbar gelagerten Rotorwelle 15.

Die Pumpe ist im vorliegenden Ausführungsbeispiel als Turbomolekularpumpe ausgebildet und umfasst mehrere pumpwirksam miteinander in Serie geschaltete turbomolekulare Pumpstufen mit mehreren an der Rotorwelle 15 befestigten radialeh Rotorscheiben 66 und zwischen den Rotorscheiben 66 angeordneten und in dem Gehäuse 64 festgelegten Statorscheiben 68, wobei eine Rotorscheibe 66 und eine benachbarte Statorscheibe 68 jeweils eine turbomolekulare Pumpstufe bilden. Die Statorscheiben 68 sind durch Abstandsringe 70 in einem gewünschten axialen Abstand zueinander gehalten.

Die Vakuumpumpe umfasst außerdem vier in radialer Richtung ineinander angeordnete und pumpwirksam miteinander in Serie geschaltete Holweckpumpstufen. Der Rotor der Holweckpumpstufen umfasst eine mit der Rotorwelle 15 einteilig ausgebildete Rotornabe 72 und zwei an der Rotornabe 72 befestigte und von dieser getragene zylindermantelförmige Holweckrotorhülsen 74, 76, die koaxial zur Rotationsachse 14 orientiert und in radialer Richtung ineinander geschachtelt sind. Ferner sind zwei zylindermantelförmige Holweckstatorhülsen 78, 80 vorgesehen, die ebenfalls koaxial zu der Rotationsachse 14 orientiert und in radialer Richtung ineinander geschachtelt sind. Eine dritte Holweckstatorhülse ist durch einen Aufnahmeabschnitt 132 des Gehäuses 64 gebildet, der zur Aufnahme und Festlegung des Antriebsmotors 20 dient.

Die pumpaktiven Oberflächen der Holweckpumpstufen sind durch die Mantelflächen, d.h. die radialen Innen- und Außenflächen, der Holweckrotorhülsen 74, 76, der Holweckstatorhülsen 78, 80 und des Aufnahmeabschnitts 132 gebildet. Die radiale Innenfläche der äußeren Holweckstatorhülse 78 liegt der radialen Außenfläche der äußeren Holweckrotorhülse 74 unter Ausbildung eines radialen Holweckspalts 82 gegenüber und bildet mit dieser die erste Holweckpumpstufe. Die radiale Innenfläche der äußeren Holweckrotorhülse 74 steht der radialen Außenfläche der inneren Holweckstatorhülse 80 unter Ausbildung eines radialen Holweckspalts 84 gegenüber und bildet mit dieser die zweite Holweckpumpstufe. Die radiale Innenfläche der inneren Holweckstatorhülse 80 liegt der radialen Außenfläche der inneren Holweckrotorhülse 76 unter Ausbildung eines radialen Holweckspalts 86 gegenüber und bildet mit dieser die dritte Holweckpumpstufe. Die radiale Innenfläche der inneren Holweckrotorhülse 76 liegt der radialen Außenfläche des Aufnahmeabschnitts 132 unter Ausbildung eines radialen Holweckspalts 87 gegenüber und bildet mit dieser die vierte Holweckpumpstufe.

Die vorstehend genannten pumpaktiven Oberflächen der Holweckstatorhülsen 78, 80 und des Aufnahmeabschnitts 132 weisen jeweils mehrere spiralförmig um die Rotationsachse 14 herum in axialer Richtung verlaufende Holwecknuten auf, während die gegenüberliegenden Mantelflächen der Holweckrotorhülsen 74, 76 glatt ausgebildet sind und das Gas im Betrieb der Vakuumpumpe in den Holwecknuten vorantreiben.

Zur drehbaren Lagerung der Rotorwelle 15 sind ein Wälzlager 88 im Bereich des Pumpenauslasses 12 und ein Permanentmagnetlager 90 im Bereich des Pumpeneinlasses 10 vorgesehen.

Im Bereich des Wälzlagers 88 ist an der Rotorwelle 15 eine konische Spritzmutter 92 mit einem zu dem Wälzlager 88 hin zunehmenden Außendurchmesser vorgesehen. Die Spritzmutter 92 steht mit zumindest einem Abstreifer eines Betriebsmittelspeichers in gleitendem Kontakt. Der Betriebsmittelspeicher umfasst mehrere aufeinander gestapelte saugfähige Scheiben 94, die mit einem Betriebsmittel für das Wälzlager 88, zum Beispiel mit einem Schmiermittel, getränkt sind. Im Betrieb der Vakuumpumpe wird das Betriebsmittel durch kapillare Wirkung von dem Betriebsmittelspeicher über den Abstreifer auf die rotierende Spritzmutter 92 übertragen und infolge der Zentrifugalkraft entlang der Spritzmutter 92 in Richtung des größer werdenden Außendurchmessers der Spritzmutter 92 zu dem Wälzlager 88 hin gefördert, wo es z.B. eine schmierende Funktion erfüllt. Das Wälzlager 88 und der Betriebsmittelspeicher sind durch einen wannenförmigen Einsatz 96 und ein Deckelelement 98 der Vakuumpumpe eingefasst.

Das Permanentmagnetlager umfasst eine rotorseitige Lagerhälfte 100 und eine statorseitige Lagerhälfte 102, welche jeweils einen Ringstapel aus mehreren in axialer Richtung aufeinander gestapelten permanentmagnetischen Ringen 104 bzw. 106 umfassen. Die Magnetringe 104, 106 liegen einander unter Ausbildung eines radialen Lagerspalts 108 gegenüber, wobei die rotorseitigen Magnetringe 104 radial außen und die statorseitigen Magnetringe 106 radial innen angeordnet sind. Das in dem Lagerspalt 108 vorhandene magnetische Feld ruft magnetische Abstoßungskräfte zwischen den Magnetringen 104, 106 hervor, welche eine radiale Lagerung der Rotorwelle 15 bewirken.

Die rotorseitigen Magnetringe 104 sind von einem Trägerabschnitt 110 der Rotorwelle getragen, welcher die Magnetringe 104 radial außenseitig umgibt. Die statorseitigen Magnetringe sind von einem statorseitigen Trägerabschnitt 112 getragen, welcher sich durch die Magnetringe 106 hindurch erstreckt und an radialen Streben 114 des Gehäuses 64 aufgehängt ist. Parallel zu der Rotationsachse 14 sind die rotorseitigen Magnetringe 104 in der einen Richtung durch ein mit dem Trägerabschnitt 110 gekoppeltes Deckelelement 116 und in der anderen Richtung durch einen radial vorstehenden Schulterabschnitt des Trägerabschnitts 110 festgelegt. Die statorseitigen Magnetringe 106 sind parallel zu der Rotationsachse 14 in der einen Richtung durch einen mit dem Trägerabschnitt 112 verbundenen Befestigungsring 118 und ein zwischen dem Befestigungsring 118 und den Magnetringen 106 angeordnetes Ausgleichselement 120 und in der anderen Richtung durch einen mit dem Trägerabschnitt 112 verbundenen Stützring 122 festgelegt.

Innerhalb des Magnetlagers ist ein Not- bzw. Fanglager 124 vorgesehen, welches im normalen Betrieb der Vakuumpumpe ohne Berührung steht und erst bei einer übermäßigen radialen Auslenkung des Rotors 16 relativ zum Stator in Eingriff gelangt und mitläuft, um einen radialen Anschlag für den Rotor 16 zu bilden, der eine Kollision der rotorseitigen Strukturen mit den statorseitigen Strukturen verhindert. Das Fanglager 124 ist als ungeschmiertes Wälzlager ausgebildet und bildet mit dem Rotor 16 und/oder dem Stator einen radialen Spalt, welcher bewirkt, dass das Fanglager 124 im normalen Pumpbetrieb außer Eingriff ist. Die radiale Auslenkung, bei der das Fanglager 124 in Eingriff gelangt, ist groß genug bemessen, so dass das Fanglager 124 im normalen Betrieb der Vakuumpumpe nicht in Eingriff gelangt, und gleichzeitig klein genug, so dass eine Kollision der rotorseitigen Strukturen mit den statorseitigen Strukturen unter allen Umständen verhindert wird.

Die Vakuumpumpe umfasst einen Antriebsmotor 20 zum drehenden Antreiben des Rotors 16. Der Antriebsmotor 20 umfasst einen Motorstator 22 mit einem Kern 38 und mit ein oder mehreren in Fig. 1 nur schematisch dargestellten Spulen 42, die in an der radialen Innenseite des Kerns 38 vorgesehenen Nuten des Kerns 38 festgelegt sind.

Der Anker des Antriebsmotors 20 ist durch den Rotor 16 gebildet, dessen Rotorwelle 15 sich durch den Motorstator 22 hindurch erstreckt. Auf dem sich durch den Motorstator 22 hindurch erstreckenden Abschnitt der Rotorwelle 15 ist radial außenseitig eine Permanentmagnetanordnung 128 festgelegt. Zwischen dem Motorstator 22 und dem sich durch den Motorstator 22 hindurch erstreckenden Abschnitt des Rotors 16 ist ein Zwischenraum 24 angeordnet, welcher einen radialen Motorspalt umfasst, über den sich der Motorstator 22 und die Permanentmagnetanordnung 128 zur Übertragung des Antriebsmoments magnetisch beeinflussen.

Die Permanentmagnetanordnung 128 ist in axialer Richtung durch eine auf die Rotorwelle 15 aufgesteckte Befestigungshülse 126 an der Rotorwelle 15 fixiert. Eine Kapselung 130 umgibt die Permanentmagnetanordnung 128 an deren radialer Außenseite und dichtet diese gegenüber dem Zwischenraum 24 ab.

Der Motorstator 22 ist in dem Gehäuse 64 durch den gehäusefesten Aufnahmeabschnitt 132 festgelegt, welcher den Motorstator 22 radial außenseitig umgibt und den Motorstator 22 in radialer und axialer Richtung abstützt. Der Aufnahmeabschnitt 132 begrenzt gemeinsam mit der Rotornabe 72 einen Motorraum 18, in dem der Antriebsmotor 20 aufgenommen ist.

Der Motorraum 18 weist einen auf der einen Seite des Zwischenraums 24 angeordneten und mit der innenliegenden, vierten Holweckpumpstufe gasleitend verbundenen Einlass 28 und einen auf der gegenüberliegenden Seite des Zwischenraums 24 angeordneten und mit dem Pumpenauslass 12 gasleitend verbundenen Auslass 30 auf.

Der Kern 38 des Motorstators 22 weist an seiner radialen Außenseite in dem in Fig. 1 links gezeigten Bereich eine Aussparung 34 auf, die gemeinsam mit dem benachbarten Bereich des Aufnahmeabschnitts 132 einen Kanal 32 bildet, durch den das in den Motorraum 18 geförderte Prozessgas an dem Zwischenraum 24 vorbei von dem Einlass 28 zu dem Auslass 30 förderbar ist.

Der Gasweg, auf dem das Prozessgas von dem Pumpeneinlass 10 zu dem Pumpenauslass 12 gelangt, ist in Fig. 1 durch Pfeile 26 veranschaulicht. Das Prozessgas wird ausgehend von dem Pumpeneinlass 10 zuerst der Reihe nach durch die turbomolekularen Pumpstufen und anschließend der Reihe nach durch die vier Holweckpumpstufen gefördert. Das aus der vierten Holweckpumpstufe austretende Gas gelangt in den Motorraum 18 und wird von dem Einlass 28 des Motorraums 18 durch den Kanal 32 hindurch zu dem Auslass 30 des Motorraums 18 und dem Pumpenauslass 12 gefördert.

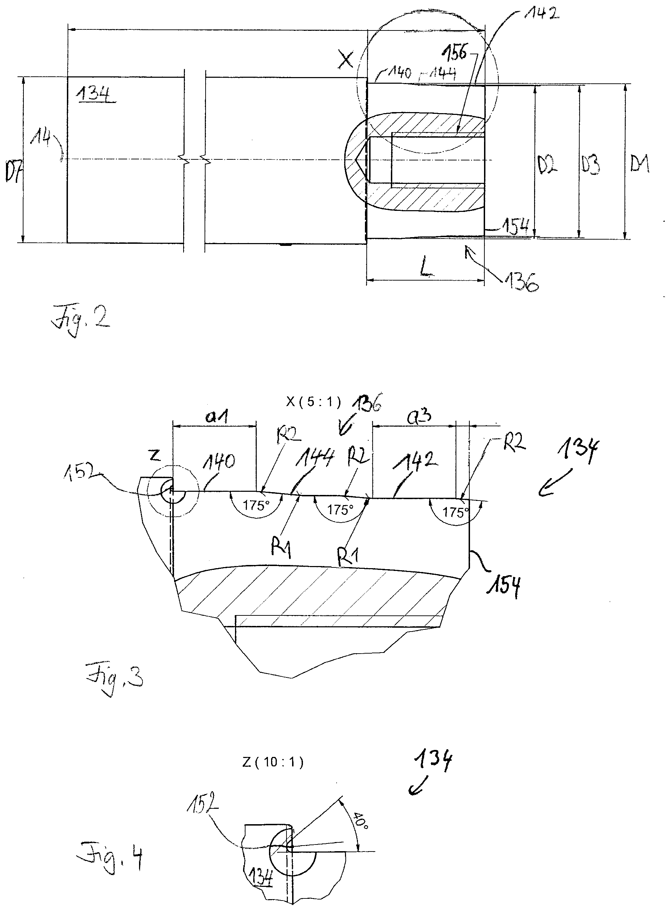

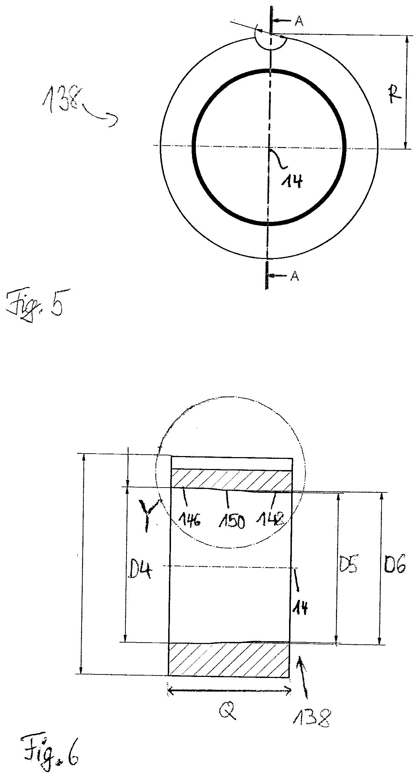

Die in den Fig. 2 bis 4 dargestellte Welle 134 umfasst an einem ihrer axialen Enden einen Bereich 136, auf den die mit Bezug zu den Fig. 5 bis 7 beschriebene Nabe 138 aufsteckbar ist. Die Welle 134 weist in dem Bereich 136 einen ersten Abschnitt 140 mit einem Außendurchmesser D1, einen zweiten Abschnitt 142 mit einem Außendurchmesser D2 und einen dazwischenliegenden dritten Abschnitt 144 mit einem Außendurchmesser D3 auf.

Wie insbesondere in Fig. 6 gezeigt ist, weist die Nabe 138 einen ersten Abschnitt 146 mit einem Innendurchmesser D4, einen zweiten Abschnitt 148 mit einem Innendurchmesser D5 und einen zwischen dem ersten Abschnitt 146 und dem zweiten Abschnitt 148 liegenden dritten Abschnitt 150 mit einem Innendurchmesser D6 auf.

Der erste Abschnitt 140 der Welle 134 und der erste Abschnitt 146 der Nabe 138 weisen relativ zueinander eine erste Presspassung auf. Dies wird zum Beispiel dadurch erreicht, dass der Außendurchmesser D1 das Passmaß 28r6 aufweist, während der Innendurchmesser D4 des ersten Abschnitts 146 der Nabe 138 das Passmaß 28H6 aufweist.

Außerdem weisen der zweite Abschnitt 142 der Welle 134 und der zweite Abschnitt 148 der Nabe 138 relativ zueinander eine weitere, zweite Presspassung auf. Dies wird z.B. dadurch erreicht, dass der Außendurchmesser D2 das Passmaß 27r6 aufweist, während der Innendurchmesser D5 des zweiten Abschnitts 148 der Nabe 138 das Passmaß 27H6 aufweist. Der dritte Abschnitt 144 der Welle 134 und der dritte Abschnitt 150 der Nabe 138 weisen dagegen relativ zueinander eine Spielpassung auf. Dies wird z.B. dadurch erreicht, dass der Außendurchmesser D3 eine Bemaßung von 27,4 mm (- 0,2 mm) aufweist, während der Innendurchmesser D6 des dritten Abschnitts 150 der Nabe 138 eine Bemaßung von 27,5 mm (+ 0,2 mm) aufweist.

Wenn die Nabe 138 auf die Welle 134 aufgesteckt ist, wird aufgrund der vorstehend genannten Passungen zwischen dem ersten Abschnitt 140 der Welle 134 und dem ersten Abschnitt 146 der Nabe 138 ein erster Pressverband und zwischen dem zweiten Abschnitt 142 der Welle 134 und dem zweiten Abschnitt 148 der Nabe 138 ein zweiter Pressverband gebildet. Dagegen herrscht ein Spiel bzw. es besteht ein geringer radialer Spalt zwischen dem dritten Abschnitt 144 der Welle 134 und dem dritten Abschnitt 150 der Nabe 138.

Der Bereich 136 weist eine axiale Länge L auf, die zumindest im Wesentlichen der axialen Länge Q der Nabe entspricht. Die axiale Länge L kann beispielsweise 21,5 mm betragen. Der erste Abschnitt 140 der Welle 134 weist eine axiale Länge a1 auf, die zumindest im Wesentlichen der axialen Länge a2 des ersten Abschnitts 146 der Nabe 138 entspricht und beispielsweise 6 mm betragen kann. Der zweite Abschnitt 142 der Welle 134 weist eine axiale Länge a3 auf, die zumindest im Wesentlichen der axialen Länge a4 des zweiten Abschnitts 148 der Nabe 138 entspricht und beispielsweise ebenfalls 6 mm betragen kann. Die Nabe 138 kann einen Außenradius R aufweisen, der beispielsweise 20,5 mm betragen kann. Ein Außendurchmesser D7 der Welle 134 kann beispielsweise 30 mm betragen.

Durch die Dimensionierung des ersten Abschnitts 140 der Welle 134 und des ersten Abschnitts 146 der Nabe 138, durch die Dimensionierung des zweiten Abschnitts 142 der Welle 134 und des zweiten Abschnitts 148 der Nabe 138 und durch die Dimensionierung des dritten Abschnitts 144 der Welle 134 und des dritten Abschnitts 150 der Nabe 138, was sowohl die jeweiligen Passungen als auch die axialen Längen der Abschnitte angeht, wird einerseits ein ausreichend fester Sitz der Nabe 138 auf dem Bereich 136 der Welle 134 erreicht. Andererseits lässt aber sicherstellen, dass die Nabe 138 von der Welle 134 bei Bedarf demontiert werden kann, insbesondere ohne die Nabe 138 oder die Welle 134 zu beschädigen oder gar zu zerstören.

Wie die Fig. 3 zeigt, sind, um ein Aufschieben der Nabe 138 auf den Bereich 136 der Welle 134 zu erleichtern, zwischen dem ersten Abschnitt 140 und dem dritten Abschnitt 144 bzw. zwischen dem zweiten Abschnitt 142 und dem dritten Abschnitt 144 Radien R1, R2 vorgesehen, wobei R1 = 0,5 mm und R2 = 0,8 mm sein kann. Außerdem ist am in axialer Richtung außenliegenden Ende des Bereichs 136, also am Übergang der zweiten Abschnitts 142 zur Stirnseite 154 der Welle 134, noch ein weiterer, zum Beispiel 1 mm langer Abschnitt vorgesehen, in den z.B. ein Radius R2 eingebracht sein kann.

Wie außerdem die Fig. 3 und 4 zeigen, ist am in axialer Richtung gesehen innenliegenden Ende des Bereichs 136 eine in Umfangsrichtung umlaufende, vom Querschnitt her kreissegmentförmige Nut 152 an der Außenseite der Welle 134 vorgesehen.

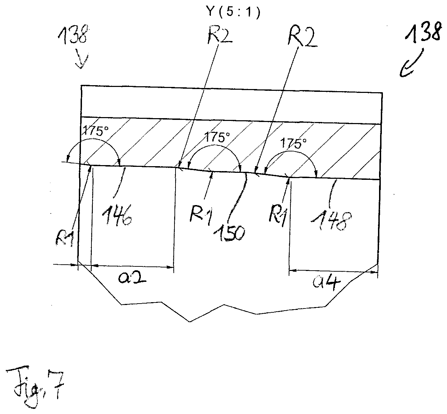

In der entsprechenden Weise wie bei der Welle 134 sind bei der Nabe 138 vor dem ersten Abschnitt 146 und in dem Übergangsbereich zwischen dem ersten Abschnitt 146 und dem zweiten Abschnitt 150 und in dem Übergangsbereich zwischen dem zweiten Abschnitt 148 und dem dritten Abschnitt 150 die Radien R1 und R2 vorgesehen, wie Fig. 7 zeigt.

An der Stirnseite 154 der Welle 134 ist eine konzentrisch zur Rotationsachse 14 verlaufende Bohrung 156 vorgesehen, beispielsweise eine M10-Bohrung (vgl. Fig. 2). Nach dem Aufsetzen der Nabe 138 auf den Bereich 136 der Welle 134 kann eine über den Außenumfang des Bereichs 136 hinausragende Scheibe durch Eindrehen einer Schraube in die Bohrung 156 an der Stirnseite 154 zur Anlage gebracht werden. Dabei kann durch die Scheibe die Nabe 138 auf den Bereich 136 der Welle 134 aufgepresst werden. Die Bohrung 156 ist aber nur als Option zu sehen, zumal die Bohrung 156 eine Unwucht in der Welle 134 hervorrufen kann, die insbesondere für Anwendungen in schnell drehenden Vakuumpumpen unerwünscht ist.

### Bezuaszeichenliste

- 10: Pumpeneinlass
- 11: Einlassflansch
- 12: Pumpenauslass
- 14: Rotationsachse
- 15: Rotorwelle
- 16: Rotor
- 18: Motorraum
- 20: Antriebsmotor
- 22: Motorstator
- 24: Zwischenraum
- 26: Pfeile, Gasweg
- 28: Einlass
- 30: Auslass
- 32: Kanal
- 34: Aussparung
- 38: Kern
- 42: Spule
- 64: Gehäuse
- 66: Rotorscheibe
- 68: Statorscheibe
- 70: Abstandsring
- 72: Rotornabe
- 74, 76: Holweckrotorhülse
- 78, 80: Holweckstatorhülse
- 82, 84, 86, 87: Holweckspalt
- 88: Wälzlager
- 90: Permanentmagnetlager
- 92: Spritzmutter
- 94: saugfähige Scheibe
- 96: wannenförmiger Einsatz
- 98: Deckelelement
- 100: rotorseitige Lagerhälfte
- 102: statorseitige Lagerhälfte
- 104, 106: Magnetring
- 108: Lagerspalt
- 110, 112: Trägerabschnitt
- 114: Strebe
- 116: Deckelelement
- 118: Befestigungsring
- 120: Ausgleichselement
- 122: Stützring
- 124: Fanglager
- 126: Befestigungshülse
- 128: Permanentmagnetanordnung
- 130: Kapselung
- 132: Aufnahmeabschnitt
- 134: Welle
- 136: Bereich
- 138: Nabe
- 140: erster Abschnitt der Welle
- 142: zweiter Abschnitt der Welle
- 144: dritter Abschnitt der Welle
- 146: erster Abschnitt der Nabe
- 148: zweiter Abschnitt der Nabe
- 150: dritter Abschnitt der Nabe
- 152: Nut
- 154: Stirnseite
- 156: Bohrung
- D1: Außendurchmesser
- D2: Außendurchmesser
- D3: Außendurchmesser
- D4: Innendurchmesser
- D5: Innendurchmesser
- D6: Innendurchmesser
- D7: Außendurchmesser
- R: Außenradius
- L: axiale Länge des Bereichs
- Q: axiale Länge der Nabe
- a1: axiale Länge des ersten Abschnitts der Welle
- a2: axiale Länge des ersten Abschnitts der Nabe
- a3: axiale Länge des zweiten Abschnitts der Welle
- a4: axiale Länge des zweiten Abschnitts der Nabe
- R1: Radius
- R2: Radius

## Patentansprüche

1. Rotoranordnung für eine Vakuumpumpe mit einem Rotor, der eine Nabe (138) aufweist, und mit einer Welle (134), wobei ein erster Abschnitt (140) der Welle (134) und ein erster Abschnitt (146) der Nabe (138) relativ zueinander eine erste Presspassung derart aufweisen, dass bei auf der Welle (134) aufgesteckter Nabe (138) zwischen dem ersten Abschnitt (140) der Welle (134) und dem ersten Abschnitt (146) der Nabe (138) ein erster Pressverband gebildet ist;
**dadurch gekennzeichnet, dass**
ein zweiter Abschnitt (142) der Welle (134) und ein zweiter Abschnitt (148) der Nabe (138) relativ zueinander eine zweite Presspassung derart aufweisen, dass bei auf der Welle (134) aufgesteckter Nabe (138) zwischen dem zweiten Abschnitt (142) der Welle (134) und dem zweiten Abschnitt (148) der Nabe (138) ein zweiter Pressverband gebildet ist;
wobei die Welle (134) zwischen ihrem ersten und zweiten Abschnitt (140, 142) einen dritten Abschnitt (144) aufweist und entsprechend die Nabe (138) zwischen ihrem ersten und zweiten Abschnitt (146, 148) einen dritten Abschnitt (150) aufweist, wobei der dritte Abschnitt (144) der Welle (134) und der dritte Abschnitt (150) der Nabe (138) relativ zueinander eine Spielpassung aufweisen.

2. Rotoranordnung nach Anspruch 1,
**dadurch gekennzeichnet, dass**
die erste Presspassung und/oder die zweite Presspassung derart dimensioniert ist/sind, dass Drehmomente bis zu einem maximalen Drehmomentwert zwischen der Nabe (138) und der Welle (134) übertragbar sind.

3. Rotoranordnung nach zumindest einem der vorhergehenden Ansprüche,
**dadurch gekennzeichnet, dass**
die axiale Länge (a1) des ersten Abschnitts (140) der Welle (134) und/oder die axiale Länge (a2) des ersten Abschnitts (146) der Nabe (138) und/oder die axiale Länge (a3) des zweiten Abschnitts (142) der Welle (134) und/oder die axiale Länge (a4) des zweiten Abschnitts (148) der Nabe (138) derart dimensioniert ist/sind, dass Drehmomente bis zu einem maximalen Drehmomentwert zwischen der Nabe (138) und der Welle (134) übertragbar sind.

4. Rotoranordnung nach zumindest einem der vorhergehenden Ansprüche,
**dadurch gekennzeichnet, dass**
die erste Presspassung und/oder die zweite Presspassung derart dimensioniert ist/sind, dass die Nabe (138) von der Welle (134) beschädigungsfrei demontierbar ist.

5. Rotoranordnung nach zumindest einem der vorhergehenden Ansprüche,
**dadurch gekennzeichnet, dass**
die axiale Länge (a1) des ersten Abschnitts (140) der Welle (134) und/oder die axiale Länge (a2) des ersten Abschnitts (146) der Nabe (138) und/oder die axiale Länge (a3) des zweiten Abschnitts (142) der Welle (134) und/oder die axiale Länge (a4) des zweiten Abschnitts (148) der Nabe (138) derart dimensioniert ist/sind, dass die Nabe (138) von der Welle (134) beschädigungsfrei demontierbar ist.

6. Rotoranordnung nach zumindest einem der vorhergehenden Ansprüche,
**dadurch gekennzeichnet, dass**
der Rotor ein Rotor eines Elektromotors (20) ist.

7. Rotoranordnung nach Anspruch 6,
**dadurch gekennzeichnet, dass**
der Rotor ein Blechpaket aufweist, in welchem Permanentmagnete vergraben sind.

8. Rotoranordnung nach zumindest einem der Ansprüche 1 bis 5,
**dadurch gekennzeichnet, dass**
der Rotor ein Rotor einer Magnetkupplung ist.

9. Vakuumpumpe, insbesondere Drehschieber-, Wälzkolben- oder Turbomolekularpumpe, mit wenigstens einem Pumpmechanismus zum Pumpen eines Gases von einem Einlass (10) der Vakuumpumpe zu einem Auslass (12) der Vakuumpumpe und mit wenigstens einer Rotoranordnung nach einem der vorhergehenden Ansprüche.

## Claims

1. A rotor arrangement for a vacuum pump having a rotor, which has a hub (138), and having a shaft (134), wherein a first section (140) of the shaft (134) and a first section (146) of the hub (138) have a first press fit relative to one another such that, when the hub (138) is plugged onto the shaft (134), a first interference fit is formed between the first section (140) of the shaft (134) and the first section (146) of the hub (138),
**characterized in that**
a second section (142) of the shaft (134) and a second section (148) of the hub (138) have a second press fit relative to one another such that, when the hub (138) is plugged onto the shaft (134), a second interference fit is formed between the second section (142) of the shaft (134) and the second section (148) of the hub (138),
wherein the shaft (134) has a third section (144) between its first and second sections (140, 142) and the hub (138) accordingly has a third section (150) between its first and second sections (146, 148), with the third section (144) of the shaft (134) and the third section (150) of the hub (138) having a clearance fit relative to one another.

2. A rotor arrangement in accordance with claim 1,
**characterized in that**
the first press fit and/or the second press fit is/are dimensioned such that torques up to a maximum torque value can be transmitted between the hub (138) and the shaft (134).

3. A rotor arrangement in accordance with at least one of the preceding claims,
**characterized in that**
the axial length (a1) of the first section (140) of the shaft (134) and/or the axial length (a2) of the first section (146) of the hub (138) and/or the axial length (a3) of the second section (142) of the shaft (134) and/or the axial length (a4) of the second section (148) of the hub (138) is/are dimensioned such that torques up to a maximum torque value can be transmitted between the hub (138) and the shaft (134).

4. A rotor arrangement in accordance with at least one of the preceding claims,
**characterized in that**
the first press fit and/or the second press fit is/are dimensioned such that the hub (138) can be dismantled from the shaft (134) without damage.

5. A rotor arrangement in accordance with at least one of the preceding claims,
**characterized in that**
the axial length (a1) of the first section (140) of the shaft (134) and/or the axial length (a2) of the first section (146) of the hub (138) and/or the axial length (a3) of the second section (142) of the shaft (134) and/or the axial length (a4) of the second section (148) of the hub (138) is/are dimensioned such that the hub (138) can be dismantled from the shaft (134) without damage.

6. A rotor arrangement in accordance with at least one of the preceding claims,
**characterized in that**
the rotor is a rotor of an electric motor (20).

7. A rotor arrangement in accordance with claim 6,
**characterized in that**
the rotor has a sheet metal package in which permanent magnets are buried.

8. A rotor arrangement in accordance with at least one of the claims 1 to 5,
**characterized in that**
the rotor is a rotor of a magnetic coupling.

9. A vacuum pump, in particular a rotary vane pump, a Roots pump or a turbomolecular pump, having at least one pumping mechanism for pumping a gas from an inlet (10) of the vacuum pump to an outlet (12) of the vacuum pump and having at least one rotor arrangement in accordance with any one of the preceding claims.

## Revendications

1. Ensemble de rotor pour une pompe à vide comprenant un rotor pourvu d'un moyeu (138) et un arbre (134), une première portion (140) de l'arbre (134) et une première portion (146) du moyeu (138) présentant un premier ajustement serré l'une par rapport à l'autre, de telle sorte qu'une première liaison serrée est formée entre la première portion (140) de l'arbre (134) et la première portion (146) du moyeu (138) lorsque le moyeu (138) est enfiché sur l'arbre (134),
**caractérisé en ce que**
une seconde portion (142) de l'arbre (134) et une seconde portion (148) du moyeu (138) présentent un second ajustement serré l'une par rapport à l'autre de telle sorte qu'une seconde liaison serrée est formée entre la seconde portion (142) de l'arbre (134) et la seconde portion (148) du moyeu (138) lorsque le moyeu (138) est enfiché sur l'arbre (134) ;
l'arbre (134) présente une troisième portion (144) entre sa première et sa seconde portion (140, 142) et, de manière correspondante, le moyeu (138) présente une troisième portion (150) entre sa première et sa seconde portion (146, 148), la troisième portion (144) de l'arbre (134) et la troisième portion (150) du moyeu (138) présentant un ajustement avec jeu l'une par rapport à l'autre.

2. Ensemble de rotor selon la revendication 1,
**caractérisé en ce que**
le premier ajustement serré et/ou le second ajustement serré est/sont dimensionné(s) de telle sorte que des couples de rotation jusqu'à une valeur de couple maximale peuvent être transmis entre le moyeu (138) et l'arbre (134).

3. Ensemble de rotor selon l'une au moins des revendications précédentes,
**caractérisé en ce que**
la longueur axiale (a1) de la première portion (140) de l'arbre (134) et/ou la longueur axiale (a2) de la première portion (146) du moyeu (138) et/ou la longueur axiale (a3) de la seconde portion (142) de l'arbre (134) et/ou la longueur axiale (a4) de la seconde portion (148) du moyeu (138) est/sont dimensionnée(s) de telle manière que des couples de rotation jusqu'à une valeur de couple maximale peuvent être transmis entre le moyeu (138) et l'arbre (134).

4. Ensemble de rotor selon l'une au moins des revendications précédentes,
**caractérisé en ce que**
le premier ajustement serré et/ou le second ajustement serré est/sont dimensionné(s) de telle sorte que le moyeu (138) peut être démonté de l'arbre (134) sans endommagement.

5. Ensemble de rotor selon l'une au moins des revendications précédentes,
**caractérisé en ce que**
la longueur axiale (a1) de la première portion (140) de l'arbre (134) et/ou la longueur axiale (a2) de la première portion (146) du moyeu (138) et/ou la longueur axiale (a3) de la seconde portion (142) de l'arbre (134) et/ou la longueur axiale (a4) de la seconde portion (148) du moyeu (138) est/sont dimensionnée(s) de telle manière que le moyeu (138) peut être démonté de l'arbre (134) sans endommagement.

6. Ensemble de rotor selon l'une au moins des revendications précédentes,
**caractérisé en ce que**
le rotor est un rotor d'un moteur électrique (20).

7. Ensemble de rotor selon la revendication 6,
**caractérisé en ce que**
le rotor comprend un empilement de tôles dans lequel sont noyés des aimants permanents.

8. Ensemble de rotor selon l'une au moins des revendications 1 à 5,
**caractérisé en ce que**
le rotor est un rotor d'un accouplement magnétique.

9. Pompe à vide, en particulier pompe à palettes, pompe Roots ou pompe turbomoléculaire, comportant au moins un mécanisme de pompage pour pomper un gaz depuis une entrée (10) de la pompe à vide jusqu'à une sortie (12) de la pompe à vide et comportant au moins un ensemble de rotor selon l'une des revendications précédentes.
